# EUROPEAN PATENT SPECIFICATION

(11) **EP 4 576 385 B1**
(45) Date of publication and mention of the grant of the patent: **02.12.2026**
(21) Application number: 24864745.5
(22) Date of filing: 31.07.2024
(51) Int. Cl.: A62C 3/16, H01M 50/264, H01M 50/30, H01M 50/204, H01M 50/383, H01M 10/658, H01M 50/249, H01M 50/211

(54) **BATTERY MODULE**
BATTERIEMODUL
MODULE DE BATTERIE

(30) Priority: 20.09.2023 KR 20230125754
(43) Date of publication of application: 25.06.2025
(73) Proprietor: LG Energy Solution, Ltd., Seoul 07335 (KR)
(72) Inventor: YUN, Hyun-Seop, Daejeon 34122 (KR); LEE, Jung-Hoon, Daejeon 34122 (KR)
(74) Representative: Plasseraud IP
(86) International application number: PCT/KR2024/011287
(87) International publication number: WO 2025/063482

(56) References cited:
- EP-A1- 3 828 988
- EP-A1- 4 195 394
- WO-A1-2022/193043
- CN-A- 115 149 202
- KR-A- 20220 101 479
- KR-A- 20230 008 524
- KR-A- 20230 032 303
- KR-A- 20230 109 983
- US-A1- 2022 077 540
- US-A1- 2022 131 227

## Description

### TECHNICAL FIELD

The present disclosure relates to a battery module.

This application is based on and claims priority from Korean Patent Application No. 10-2023-0125754, filed on September 20, 2023, with the Korean Intellectual Property Office.

### BACKGROUND ART

As the demand for portable electronic products such as laptops, video cameras, and mobile phones sharply increase, and as robots, electric vehicles, and the like are commercialized, active researches on high-performance secondary batteries capable of being repeated charged and discharged are underway.

Currently commercialized secondary batteries include nickel-cadmium batteries, nickel-hydrogen batteries, nickel-zinc batteries, and lithium secondary batteries. Among these, lithium secondary batteries are in the spotlight for their advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which positive and negative electrode plates, which are coated with the positive and negative electrode active materials, respectively, are disposed with a separator therebetween, and an exterior case, i.e., a battery case, that stores and seals the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used for driving or storing energy in medium and large devices such as electric vehicles and energy storage systems (ESSs), as well as in small devices such as portable electronic devices. A battery module may be configured such that multiple secondary batteries electrically connected to each other are stored inside a module case. Furthermore, a battery pack may be configured by electrically connecting multiple battery modules described above.

However, if multiple secondary batteries (battery cells) or multiple battery modules are intensively stored in a small space, they may be vulnerable to thermal events. In particular, if thermal runaway occurs inside any one battery cell, high-temperature gas, flame, or heat may be generated. If the gas, flame, or heat spreads to another battery cell included in the same battery module, a chain reaction such as thermal propagation may occur. In addition, this may cause a fire or explosion in other battery modules, as well as in the relevant battery module.

Furthermore, since medium and large battery packs applied to electric vehicles include a large number of battery cells and battery modules to increase output and/or capacity, the risk of a thermal chain reaction could be even greater. In addition, there may be users such as drivers nearby the battery packs mounted to electric vehicles. Therefore, if a thermal event occurring in a specific battery cell or module is not properly controlled and leads to a chain reaction, it may cause human casualties as well as significant property damage. Therefore, it is necessary to properly control thermal events occurring in the battery cell or module to suppress thermal propagation.
WO 2022/193043 discloses a battery module comprising a fire prevention cover including a layer comprising aramid material and optional mica and a layer comprising inorganic short fibers.

### DISCLOSURE

### Technical Problem

The present disclosure aims to solve the aforementioned problems and other problems.

The present disclosure is to provide a battery module with improved thermal safety when a thermal event occurs.

The present disclosure is also to provide a battery module that discharges venting gas while suppressing the discharge of flames or ignitable particles when a thermal event occurs.

The present disclosure is also to provide a battery module capable of easy venting control when a thermal event occurs.

### Technical Solution

The invention is defined in the claims. According to the invention, there is provided a battery module including: a case configured to provide an inner space; a battery cell positioned inside the case; and a fire prevention cover provided on one side of the case and including a first sheet that includes a mica material and a second sheet that includes a metal wire material.

In addition, the first sheet is coupled to one side of the case, and the second sheet is coupled to the first sheet.

In addition, the fire prevention cover further includes a third sheet coupled to the second sheet and including a mica material.

In addition, the first sheet has a plurality of first through-holes, and the third sheet has a plurality of second through-holes.

In addition, the plurality of first through-holes and the plurality of second through-holes may be arranged in a staggered manner with respect to each other.

In addition, the plurality of first through-holes may be configured to be larger than the plurality of second through-holes.

In addition, the battery module may further include a fastening member configured to pass through at least one of the first sheet and the third sheet and through the second sheet.

In addition, the first sheet may be attached to one side of the case.

In addition, the second sheet may include a mesh structure.

In addition, a venting hole may be provided on one side of the case.

In addition, the battery module may further include a wire connected to one side of the case, and the fire prevention cover may have a connecting hole through which the wire passes.

A battery pack according to another aspect of the present disclosure includes a battery module of the present disclosure.

In addition, a plurality of battery modules may be provided, and the battery pack may further include a fire prevention cover positioned between the plurality of battery modules.

A vehicle according to another aspect of the present disclosure includes a battery module of the present disclosure.

### Advantageous Effects

According to at least one of the embodiments of the present disclosure, it is possible to provide a battery module with improved thermal safety when a thermal event occurs.

According to at least one of the embodiments of the present disclosure, it is possible provide a battery module that discharges venting gas while suppressing the discharge of flames or ignitable particles when a thermal event occurs.

According to at least one of the embodiments of the present disclosure, it is possible provide a battery module capable of easy venting control when a thermal event occurs.

### DESCRIPTION OF DRAWINGS

The accompanying drawings illustrate a preferred embodiment of the present disclosure and, together with the detailed description of the invention, serve to provide further understanding of the present disclosure, and thus, the present disclosure is not construed as being limited to the drawings.
FIG. 1 illustrates a battery module according to an embodiment of the present disclosure.
FIG. 2 is a partially exploded perspective view of the battery module in FIG. 1.
FIG. 3 is an exploded perspective view of a fire prevention cover of a battery module according to an embodiment of the present disclosure.
FIG. 4 is a cross-sectional view illustrating a fire prevention cover coupled to a battery module according to an embodiment of the present disclosure.
FIG. 5 is a cross-sectional view illustrating the case where a thermal event occurs in FIG. 4.
FIG. 6 is a diagram illustrating a modified embodiment of FIG. 4.
FIG. 7 is a diagram illustrating another modified embodiment of FIG. 4.
FIG. 8 is a diagram illustrating another modified embodiment of FIG. 4.
FIG. 9 is a diagram illustrating another modified embodiment of FIG. 4.
FIG. 10 illustrates a battery module according to another embodiment of the present disclosure.
FIG. 11 illustrates a battery module according to another embodiment of the present disclosure.
FIG. 12 is a diagram illustrating a modified embodiment of the fire prevention cover in FIG. 3.
FIG. 13 illustrates a battery module according to another embodiment of the present disclosure.
FIG. 14 is a cross-sectional view taken along line A-A' in FIG. 13.
FIG. 15 illustrates a battery module according to another embodiment of the present disclosure.
FIG. 16 is a cross-sectional view taken along line B-B' in FIG. 15.
FIG. 17 is a diagram illustrating an end fire prevention cover separated from a battery module according to an embodiment of the present disclosure.
FIG. 18 is a drawing illustrating a battery module connected with wires according to an embodiment of the present disclosure.
FIG. 19 is a partially exploded perspective view a battery pack according to an embodiment of the present disclosure.
FIGS. 20 and 21 are diagrams illustrating battery modules accommodated in the battery pack in FIG. 19.
FIG. 22 is a cross-sectional view illustrating neighboring battery modules in FIG. 21.
FIG. 23 is a partially exploded perspective view a battery pack according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure, so it should be understood that various equivalents and modifications could be made thereto at the time of filing the application.

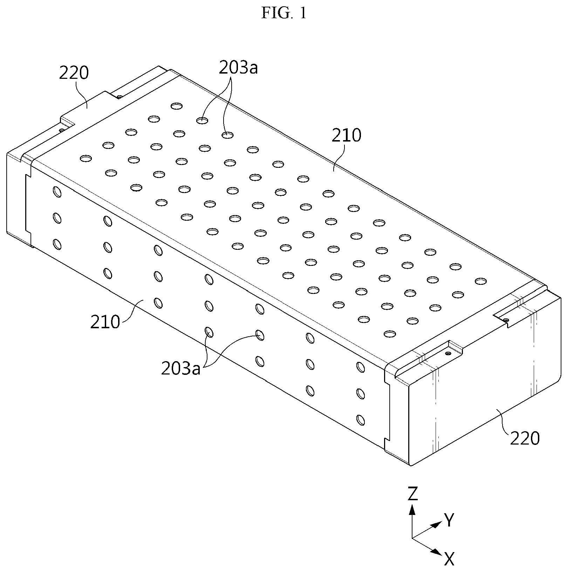

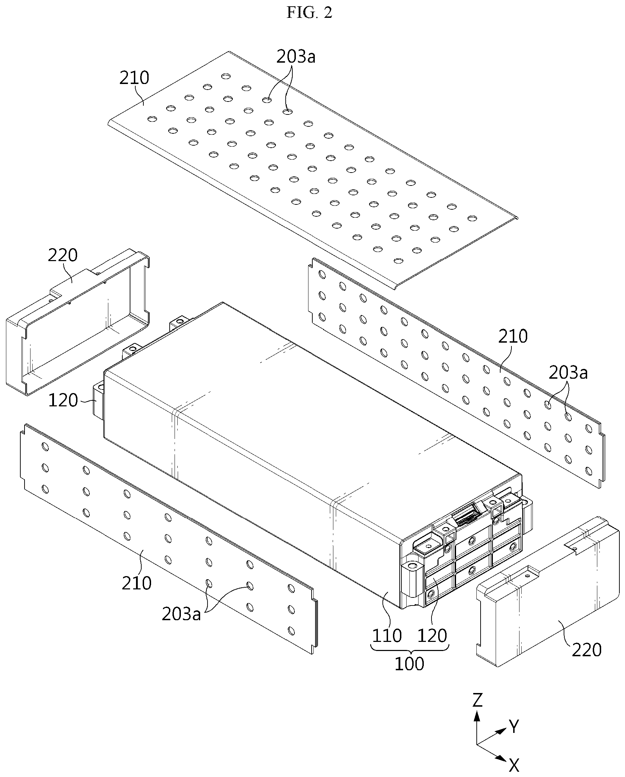

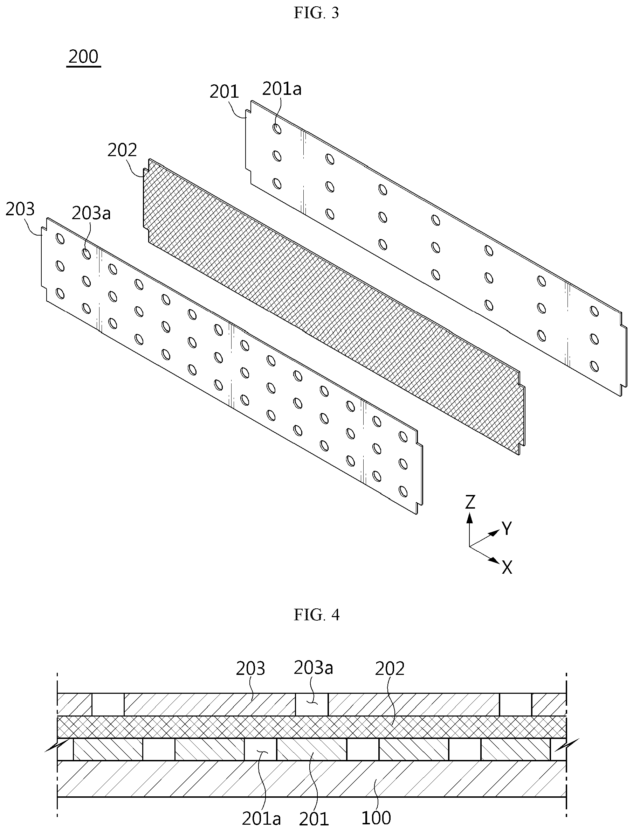

FIG. 1 illustrates a battery module according to an embodiment of the present disclosure. FIG. 2 is a partially exploded perspective view of the battery module in FIG. 1. FIG. 3 is an exploded perspective view of a fire prevention cover 200 of a battery module according to an embodiment of the present disclosure.

Referring to FIGS. 1 to 3, a battery module according to an embodiment of the present disclosure may include a case 100, a battery cell, and a fire prevention cover 200. The case 100 may include a frame 110 and an end cover 120. The frame 110 may have a cuboid shape. The frame 110 may provide a space therein. The frame 110 may have front and rear openings. The end cover 120 may have a plate shape. The end cover 120 may be coupled, fastened, or fixed to the opening of the frame 110. In addition, the end cover 120 and the frame 110 may be coupled by welding. A pair of end covers 120 may be provided. The pair of end covers 120 may cover the front opening and the rear opening of the frame 110, respectively.

The battery cell may be located inside the case 100. The battery cell may be accommodated in an inner space provided by the frame 110. In this case, the battery cell may indicate a secondary battery. The battery cell may be a pouch-type secondary battery. A plurality of battery cells may be provided. The plurality of battery cells may be arranged or stacked in one direction. For example, the plurality of battery cells may be arranged or stacked in the left-right direction or in the Y-axis direction.

The fire prevention cover 200 may be provided on one side of the case 100. In this case, the fire prevention cover 200 may be provided on any one side of the frame 110 or on the end cover 120. In addition, a plurality of fire prevention covers 200 may be provided. For example, the fire prevention cover 200 may include a side fire prevention cover 210 provided on the frame 110. In addition, the fire prevention cover 200 may include an end fire prevention cover 220 provided on the end cover 120.

The fire prevention cover 200 may include a first sheet 201 including a mica material. The first sheet 201 may have high heat resistance and flame resistance. In addition, the first sheet 201 may include a fire-resistant coating on one side or the other side thereof. In addition, the fire prevention cover 200 may include a second sheet 202 including a metal wire material. For example, the second sheet 202 may include a material or structure such as steel wool.

According to this configuration of the present disclosure, the fire prevention cover 200 may improve the thermal safety of the battery module. When a thermal event occurs, the first sheet 201 of the fire prevention cover 200 may delay or block the heat or flame emitted from the battery module from spreading. In addition, the second sheet 202 may form an insulating air layer, thereby delaying or blocking the heat from spreading. In addition, the second sheet 202 may capture flames or ignitable particles f emitted from the battery module. As a result, flames or ignitable particles f emitted from the battery module may be reduced or prevented from being released to the outside.

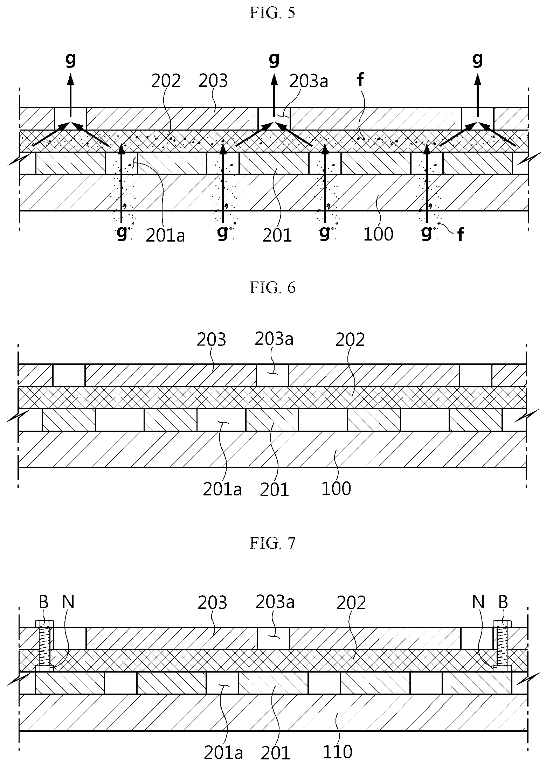

FIG. 4 is a cross-sectional view illustrating a fire prevention cover 200 coupled to a case 100 of a battery module according to an embodiment of the present disclosure. FIG. 5 is a cross-sectional view illustrating the case where a thermal event occurs in FIG. 4. Referring to FIGS. 1 to 5, the first sheet 201 of the fire prevention cover 200 of the battery module of the present disclosure may be coupled to one side of the case 100. In addition, the second sheet 202 may be coupled to the first sheet 201.

According to this configuration of the present disclosure, the fire prevention cover 200 may improve the thermal safety of the battery module. When a thermal event occurs, heat, gas g, flames, or ignitable particles f may be released from the inside of the battery module. As a result, the frame 110 or the end cover 120 may melt. The flame or ignitable particles f may be released through a hole produced by the melting of the frame 110 or the end cover 120. The first sheet 201 may be coupled to the case 100, thereby delaying or blocking the release of flames and ignitable particles f. In addition, the second sheet 202 may capture flames or ignitable particles f passing through the first sheet 201 to delay or block them from being released to the outside.

Referring to FIGS. 1 to 5, the fire prevention cover 200 according to an embodiment of the present disclosure may further include a third sheet 203. The third sheet 203 may be coupled to the second sheet 202. In addition, the third sheet 203 may include a mica material. The third sheet 203 may have high heat resistance and flame resistance. In addition, the third sheet 203 may include a fire-resistant coating on one side or the other side thereof. The second sheet 202 is located between the first sheet 201 and the third sheet 203.

According to this configuration of the present disclosure, the second sheet 202 may be stably fixed. The first sheet 201 and the third sheet 203 may stably support the second sheet 202.

In addition, according to this configuration of the present disclosure, the fire prevention cover 200 may improve the thermal safety of the battery module. The second sheet 202 may delay or block the release of flames or ignitable particles f to the outside. The third sheet 203 may delay or block the release of flames or ignitable particles f that failed to be blocked by the second sheet 202. Since the fire prevention cover 200 has the first sheet 201 to the third sheet 203, it may suppress heat propagation more reliably.

Referring to FIGS. 1 to 5, the fire prevention cover 200 of the battery module according to an embodiment of the present disclosure may have a first through-hole 201a and a second through-hole 203a. The first through-hole 201a may be formed on the first sheet 201. In addition, a plurality of first through-holes 201a may be provided. The second through-hole 203a may be formed on the third sheet 203. In addition, a plurality of second through-holes 203a may be provided.

According to this configuration of the present disclosure, the fire prevention cover 200 may improve the thermal safety of the battery module. When a thermal event occurs, flames, gas g, or ignitable particles f may be release to the outside of the case 100. The first sheet 201 may block the flames. In addition, the gas g or ignitable particles f may be introduced to the second sheet 202 through the first through-hole 201a. The second sheet 202 may capture the ignitable particles f and allow the gas g to pass therethrough. In addition, the third sheet 203 may allow gas g to pass through the second through-hole 203a. The fire prevention cover 200 may discharge gas g and block flames and ignitable particles f, thereby suppressing thermal propagation.

Referring to FIGS. 1 to 5, the plurality of first through-holes 201a and the plurality of second through-holes 203a of the fire prevention cover 200 of the battery module according to an embodiment of the present disclosure may be arranged in a staggered manner.

According to this configuration of the present disclosure, the fire prevention cover 200 may improve the thermal safety of the battery module. The staggered arrangement of the first through-holes 201a and the second through-holes 203a may increase the movement distance of the gas g, flame, or ignitable particle f when a thermal event occurs. In addition, the movement distance of the gas g, flame, or ignitable particle f passing through the second sheet 202 may be increased. As a result, the fire prevention cover 200 may discharge gas g and block flames and ignitable particles f more reliably, thereby suppressing thermal propagation.

Referring to FIGS. 1 to 5, the fire prevention cover 200 of a battery module according to an embodiment of the present disclosure may be attached to one side of the case 100. In particular, the first sheet 201 of the fire prevention cover 200 may be attached to one side of the frame 110 or end cover 120.

According to this configuration of the present disclosure, the fire prevention cover 200 may be attached or bonded to the case 100, thereby more reliably blocking flames and ignitable particles f.

Referring to FIGS. 1 to 5, the fire prevention cover 200 of a battery module according to an embodiment of the present disclosure may include a mesh structure. The second sheet 202 may include a mesh structure. The mesh structure may include a metal material. The mesh structure of the second sheet 202 may be configured so densely that it is able to capture flames and ignitable particles f.

According to this configuration of the present disclosure, the fire prevention cover 200 may capture flames and ignitable particles f more reliably, thereby improving the thermal stability of the battery module.

FIG. 6 is a diagram illustrating a modified embodiment of FIG. 4. Referring to FIG. 6, a plurality of first through-holes 201a of a fire prevention cover 200 of a battery module according to an embodiment of the present disclosure may be configured to be larger than a plurality of second through-holes 203a.

According to this configuration of the present disclosure, the pressure at which gas g is discharged from the third sheet 203 may be greater than the pressure at which gas g, flames, or ignitable particles f are introduced into the first sheet 201. As a result, the time taken for the ignitable particles f to pass through the second sheet 202 may be increased, so that the ignitable particles f may be captured more reliably.

FIG. 7 is a diagram illustrating another modified embodiment of FIG. 4. Referring to FIG. 7, a fire prevention cover 200 of a battery module of the present disclosure may be coupled by means of a fastening member. A nut N may be provided on the outer surface of the first sheet 201. For example, the nut N may be a Pem nut N fixed to the outer surface of the first sheet 201. In addition, a bolt B passing through the third sheet 203 may be engaged with the Pem nut N. In addition, the bolt B may pass through the second sheet 202. The second sheet 202 may be fixed between the first sheet 201 and the third sheet 203.

According to this configuration of the present disclosure, the first sheet 201 to the third sheet 203 may stably maintain their shapes.

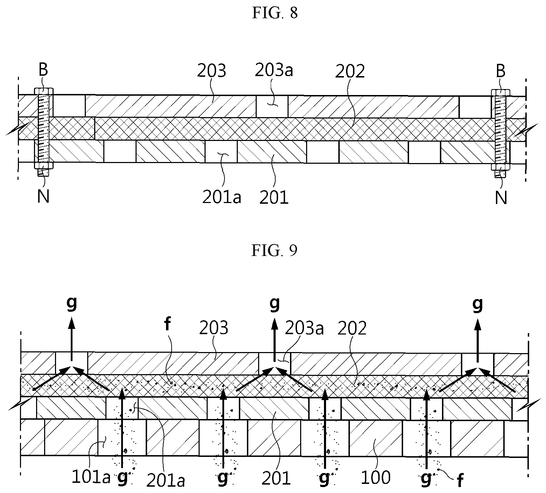

FIG. 8 is a diagram illustrating another modified embodiment of FIG. 4. Referring to FIG. 8, a fire prevention cover 200 of a battery module of the present disclosure may be coupled by means of a fastening member. A nut N may be provided on the inner surface of the first sheet 201. For example, the nut N may be a Pem nut N fixed to the inner surface of the first sheet 201. In addition, a bolt B passing through the first sheet 201 and the third sheet 203 may be engaged with the Pem nut N. In addition, the bolt B may pass through the second sheet 202. The second sheet 202 may be fixed between the first sheet 201 and the third sheet 203.

According to this configuration of the present disclosure, the first sheet 201 to the third sheet 203 may stably maintain their shapes.

FIG. 9 is a diagram illustrating another modified embodiment of FIG. 4. Referring to FIG. 9, a venting hole 101 may be provided on one side of the case 100 according to an embodiment of the present disclosure. In this case, the venting hole 101 may be provided on the frame 110 or the end cover 120. In addition, the venting hole 101 may be positioned to communicate with the first through-hole 201a of the first sheet 201.

According to this configuration of the present disclosure, when a thermal event occurs, gas g, flames, or ignitable particles f generated inside the case 100 may quickly flow to the fire prevention cover 200 through the venting hole 101 and the first through-hole 201a. As a result, the thermal safety of the battery module may be improved.

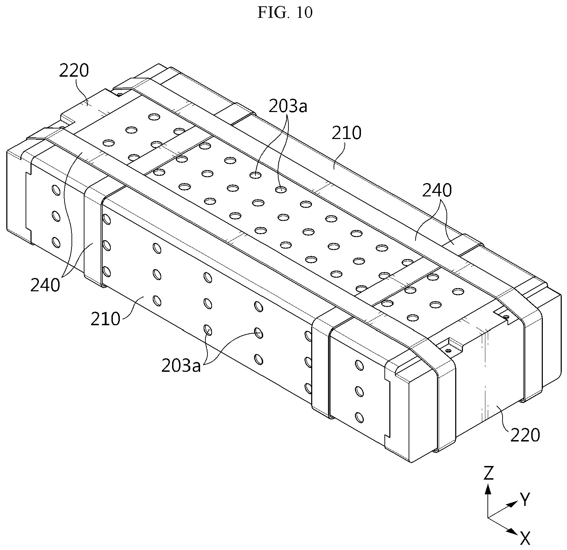

FIG. 10 illustrates a battery module according to another embodiment of the present disclosure. Referring to FIG. 10, a battery module according to an embodiment of the present disclosure may include a plurality of fire prevention covers 200. The band 240 may stably fix the plurality of fire prevention covers 200. The band 240 may stably attach the plurality of fire prevention covers 200 to the case 100. The band 240 may include a metal material. In addition, a plurality of bands 240 may be provided. For example, the band 240 may extend along the perimeter of the frame 110. In addition, the band 240 may extend to surround the frame 110 and the end cover 120.

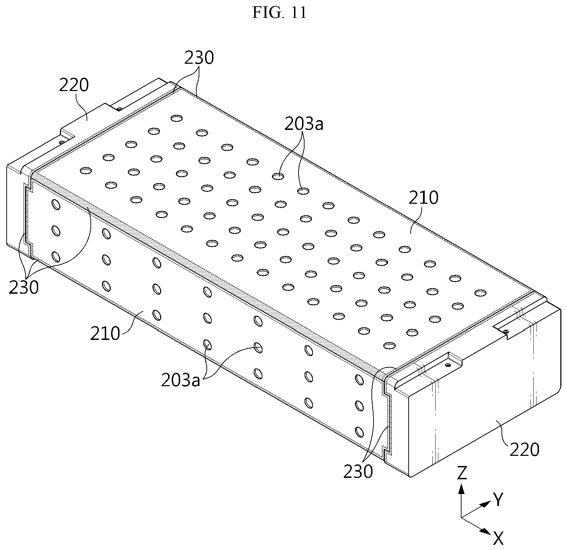

FIG. 11 illustrates a battery module according to another embodiment of the present disclosure. Referring to FIG. 10, a battery module according to an embodiment of the present disclosure may include a plurality of fire prevention covers 200. The plurality of fire prevention covers 200 may be connected, coupled, or fixed to each other through caulking. In addition, the plurality of fire prevention covers 200 may be fixed to or may come into close contact with the case 100 through caulking. The caulking may be made of a metal material. A caulking portion 230 may be formed along the edges of the plurality of fire prevention covers 200. In addition, the caulking portion 230 may be formed along the perimeter of each of the plurality of fire prevention covers 200. The caulking portion 230 may be referred to as a coupling portion 230.

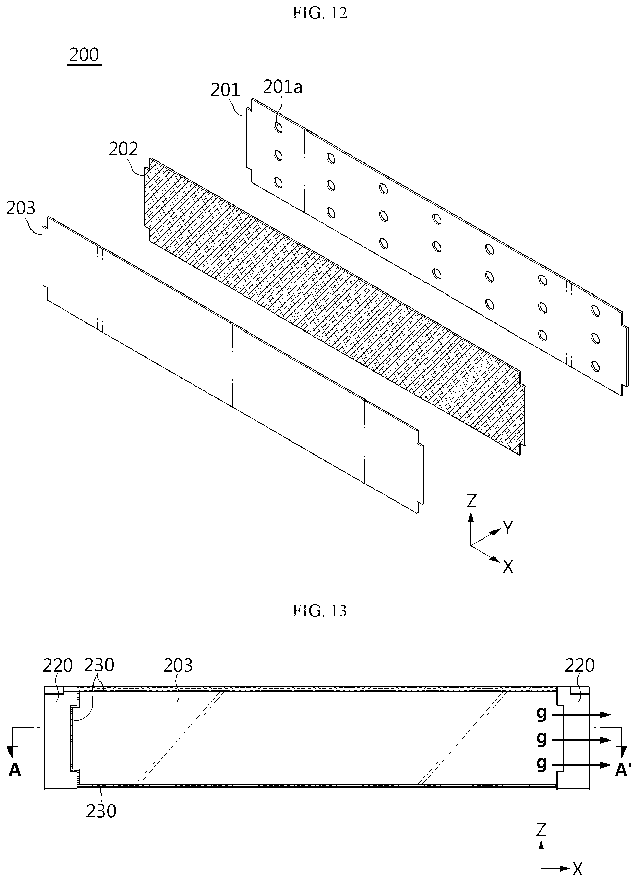

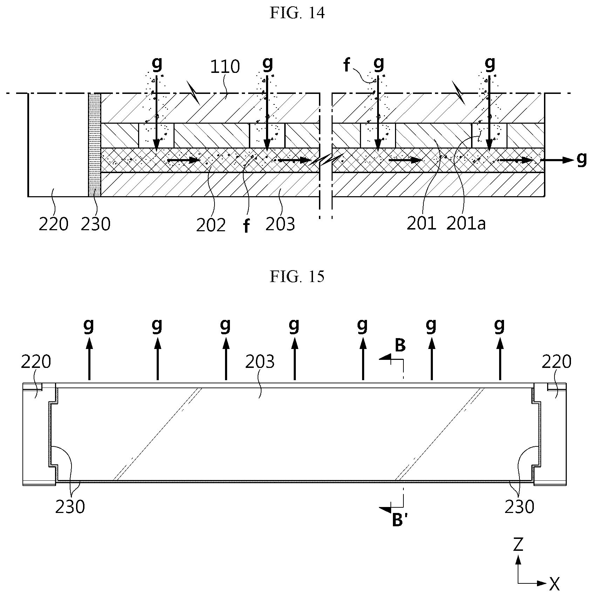

FIG. 12 is a diagram illustrating a modified embodiment of the fire prevention cover 200 in FIG. 3. FIG. 13 illustrates a battery module according to another embodiment of the present disclosure. FIG. 14 is a cross-sectional view taken along line A-A' in FIG. 13. Referring to FIGS. 12 to 14, the first sheet 201 may have a first through-hole 201a. In addition, the third sheet 203 may be configured without a through-hole. In addition, the first sheet 201 to the third sheet 203 may be coupled through caulking. In this case, a coupling portion 230 may be formed along the perimeter of the fire prevention cover 200, and may not be formed in some sections. For example, the coupling portion 230 may be formed at the upper edge, lower edge, and left edge of the fire prevention cover 200, and may not be formed at the right edge. As a result, the right edge of the fire prevention cover 200 may be open.

According to this configuration of the present disclosure, venting control may be facilitated. When a thermal event occurs, gas g, flames, or ignitable particles f released from the battery module may flow to the fire prevention cover 200 through the venting hole 101 or the first through-hole 201a. In addition, since the third sheet 203 does not include a through-hole, the gas g may be discharged through the right edge of the fire prevention cover 200 or through the second sheet 202. In this case, the flames and ignitable particles f may be captured by the second sheet 202. Since the gas g is discharged through a portion where the coupling portion is not formed, venting control of the battery module may be facilitated.

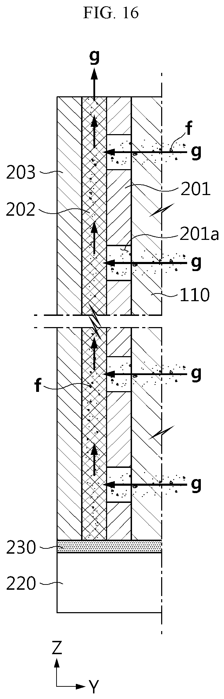

FIG. 15 illustrates a battery module according to another embodiment of the present disclosure. FIG. 16 is a cross-sectional view taken along line B-B' in FIG. 15. Referring to FIGS. 15 and 16, the coupling portion 230 may be formed along the perimeter of the fire prevention cover 200, and may not be formed in some sections. For example, the coupling portion 230 may be formed at the lower edge, right edge, and left edge of the fire prevention cover 200, and may not be formed at the upper edge. As a result, the upper edge of the fire prevention cover 200 may be open.

According to this configuration of the present disclosure, gas g may be discharged through the upper edge where the coupling portion is not formed or through the second sheet 202.

Referring to FIGS. 10 to 16, a battery module according to an embodiment of the present disclosure may include fire prevention covers 200 of various shapes. A plurality of fire prevention covers 200 may be provided, and respective fire prevention covers 200 may have different shapes and structures. For example, the third sheet 203 of a fire prevention cover 200 provided on the left and right sides of the frame 110 may not include a through-hole and may be configured to perform upward venting. In addition, the first sheet 201 of a fire prevention cover 200 provided on the upper side of the frame 110 may have a first through-hole 201a, and the third sheet 203 thereof may have a second through-hole 203a. As a result, the battery module may perform upward venting control.

According to this configuration of the present disclosure, the structure of the fire prevention cover 200 may be modified in various ways, the venting control of the battery module may be performed in various directions.

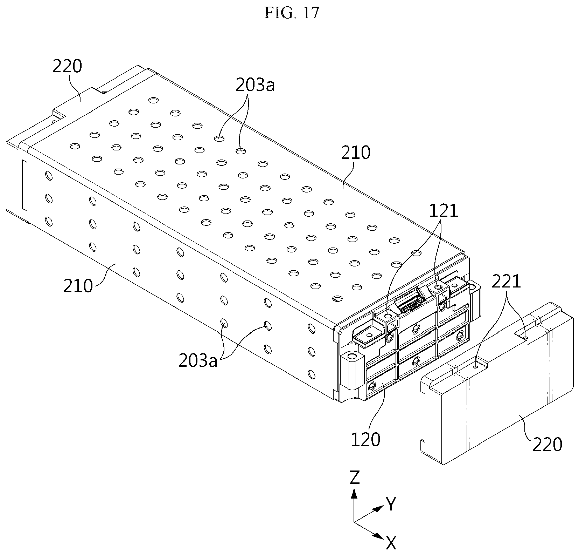

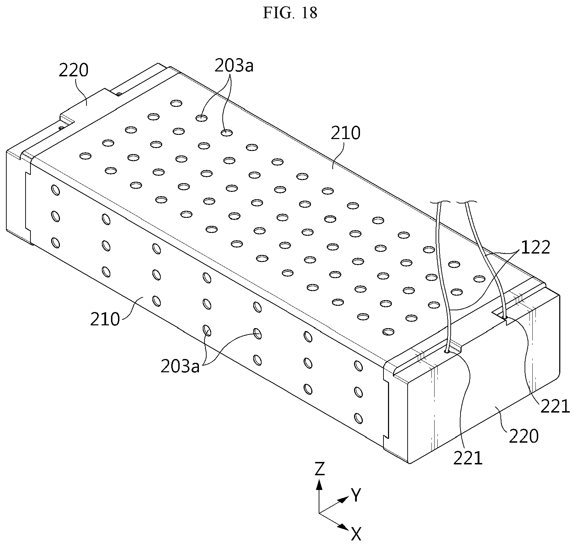

FIG. 17 is a diagram illustrating an end fire prevention cover 220 separated from a battery module according to an embodiment of the present disclosure. FIG. 18 is a drawing illustrating a battery module connected with wires 122 according to an embodiment of the present disclosure.

Referring to FIGS. 17 and 18, the battery module according to an embodiment of the present disclosure may include a wire 122 connected to one side of the case 100. The wire 122 may be electrically and physically connected to a terminal 121 of the battery module. For example, the wire 122 may be electrically and physically connected to an output terminal 121 or a sensing terminal 121 of the end cover 120. In addition, the end fire prevention cover 220 may have a connecting hole 221 through which the wire 122 passes.

According to this configuration of the present disclosure, the end fire prevention cover 220 may cover the entire area of the end cover 120, excluding the portion where the connecting hole 221 is formed. Therefore, the thermal-propagation suppression performance of the fire prevention cover 200 may be improved.

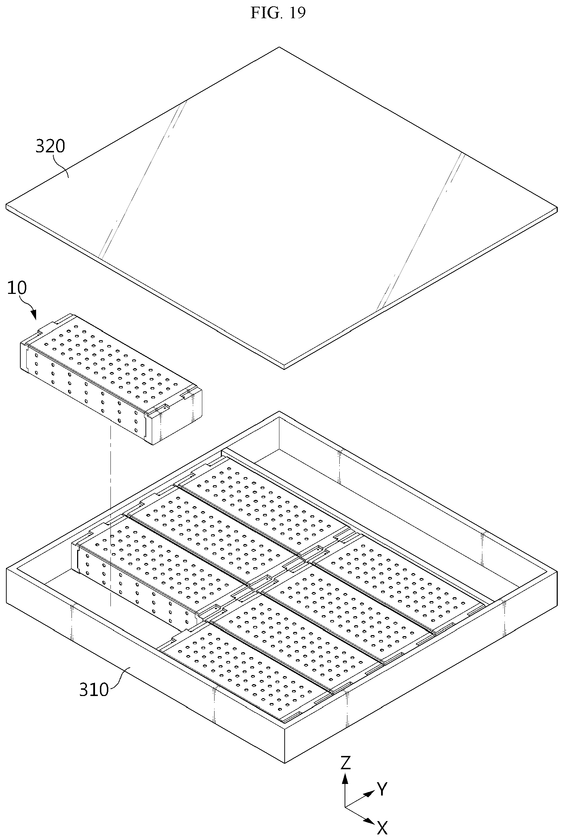

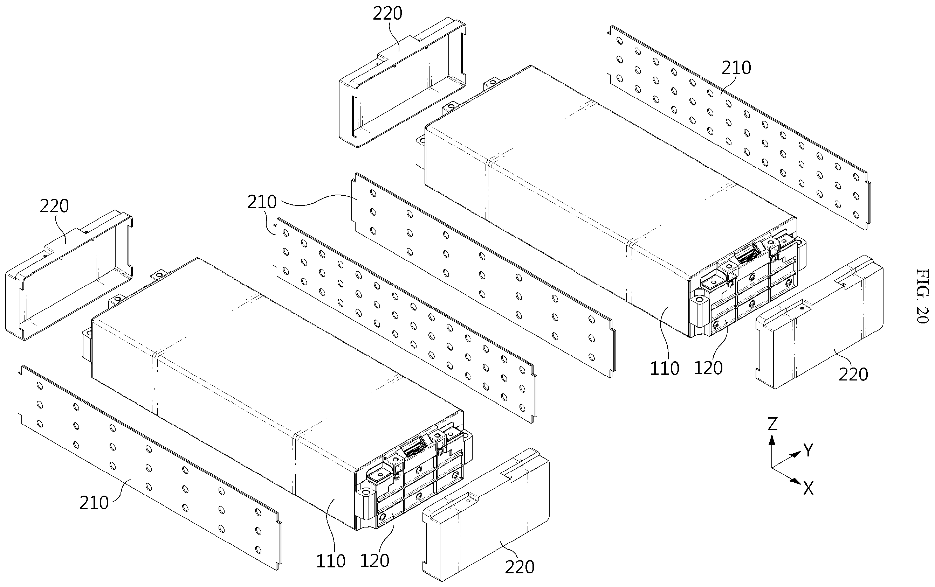

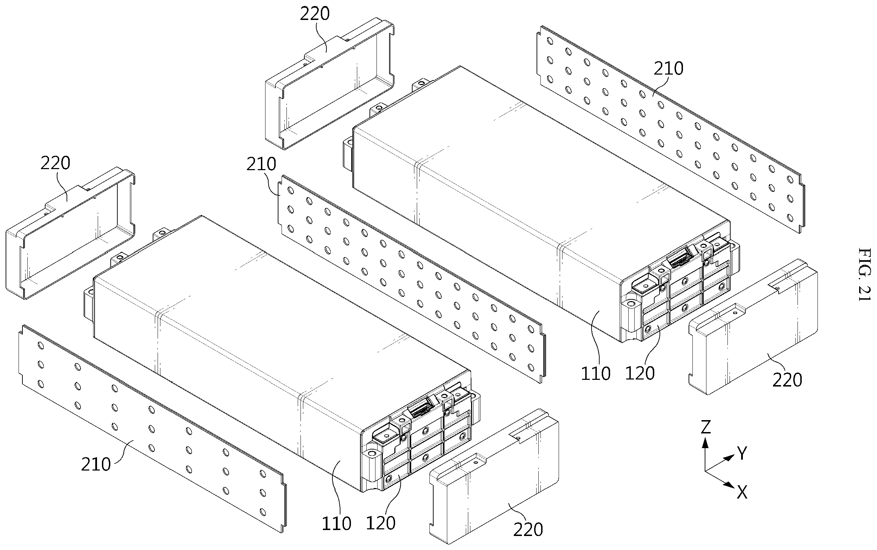

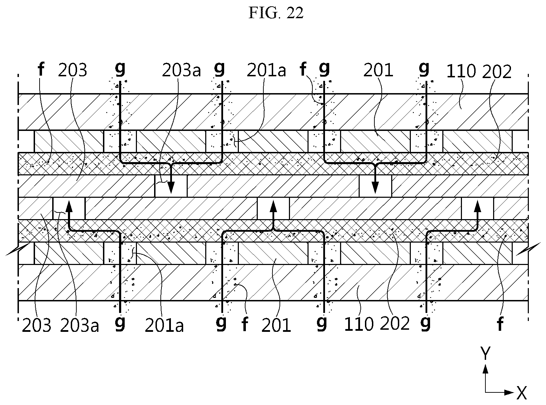

FIG. 19 is a partially exploded perspective view a battery pack according to an embodiment of the present disclosure. FIGS. 20 and 21 are diagrams illustrating battery modules accommodated in the battery pack in FIG. 19. FIG. 22 is a cross-sectional view illustrating neighboring battery modules in FIG. 21.

Referring to FIGS. 19 to 22, the battery pack according to an embodiment of the present disclosure may include a battery module according to an embodiment of the present disclosure. The battery pack may include a pack case 310 and a pack cover 320. The pack case 310 may provide a space therein. The pack case 310 may have an upper opening. In addition, the pack case 310 may have a cuboid shape. The battery pack may include a plurality of battery modules. The plurality of battery modules may be accommodated in the space provided by the pack case 310. The pack cover 320 may be coupled, fastened, or fixed to the opening of the pack case 310. The pack cover 320 may cover the inner space of the pack case 310. The plurality of battery modules may be arranged or stacked in a row. In addition, a fire prevention cover 200 may be positioned between neighboring battery modules. Alternatively, the fire prevention cover 200 may be positioned between neighboring cases 100. In this case, one or two fire prevention covers 200 may be provided.

According to this configuration of the present disclosure, thermal propagation may be suppressed by the fire prevention covers 200 positioned between adjacent cases 100.

Referring to FIGS. 21 and 22, two fire prevention covers 200 may be positioned between adjacent cases 100. The two fire prevention covers 200 may come into contact with each other while facing each other. In addition, two third sheets 203 may come into contact with each other while facing each other. In this case, the second through-holes 203a formed in the third sheets 203 may be configured to be staggered with respect to each other.

According to this configuration of the present disclosure, since the second through-holes 203a are arranged to be staggered, thermal propagation to the adjacent battery module 10 may be suppressed. In addition, gas g, flames, or ignitable particles f released from the neighboring battery module 10 may be suppressed or blocked from flowing in through the second through-hole 203a.

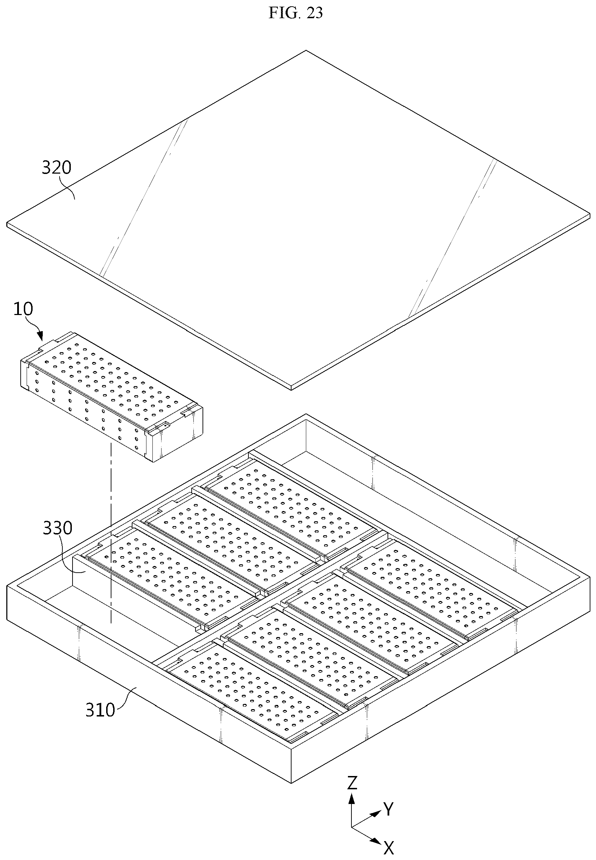

FIG. 23 is a partially exploded perspective view a battery pack according to another embodiment of the present disclosure. Referring to FIG. 23, the battery pack may include a partition wall 330. The partition wall 330 may partition the inner space of the pack case 310. The battery module 10 may be accommodated in the space partitioned by the partition wall 330.

According to this configuration of the present disclosure, the thermal safety of the battery pack may be improved. The fire prevention cover 200 and the partition wall 330 of the battery module 10 may more reliably suppress thermal propagation.

In addition, the battery pack according to the present disclosure may further include various components, such as components of the battery pack known at the time of filing the present disclosure, such as a BMS, a bus-bar, a relay, a current sensor, and the like.

A vehicle according to the present disclosure may include the battery module according to the present disclosure described above. The battery pack according to the present disclosure may be applied to a vehicle such as an electric vehicle or a hybrid vehicle. In addition, the vehicle according to the present disclosure may further include various other components included in the vehicle, such as a car body, a motor, a control device such as an ECU (electronic control unit), or the like, in addition to the battery pack.

Meanwhile, although terms indicating directions such as upward, downward, left, right, front, and back are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the scope of the claims.

## Claims

1. A battery module comprising:
a case (100) configured to provide an inner space;
a battery cell positioned inside the case (100); and
a fire prevention cover (200) provided on one side of the case (100) and comprising a first sheet (201) that comprises a mica material and a second sheet (202) that comprises a metal wire material,
wherein the first sheet (201) is coupled to one side of the case (100), and
wherein the second sheet (202) is coupled to the first sheet (201),
and that the fire prevention cover (200) further comprises
a third sheet (203) coupled to the second sheet (202) and comprising a mica material,
the second sheet (202) being located between the first sheet (201) and the third sheet (203),
**characterized in that** the first sheet (201) has a plurality of first through-holes (201a), and
the third sheet (203) has a plurality of second through-holes (203a).

2. The battery module according to claim 1,
wherein the plurality of first through-holes (201a) and the plurality of second through-holes (203a) are arranged in a staggered manner with respect to each other.

3. The battery module according to claim 1,
wherein the plurality of first through-holes (201a) are larger than the plurality of second through-holes (203a).

4. The battery module according to claim 1,
further comprising a fastening member configured to pass through at least one of the first sheet (201) and the third sheet (203) and through the second sheet (202).

5. The battery module according to claim 1,
wherein the first sheet (201) is attached to one side of the case (100).

6. The battery module according to claim 1,
wherein the second sheet (202) comprises a mesh structure.

7. The battery module according to claim 1,
wherein a venting hole (101) is provided on one side of the case (100).

8. The battery module according to claim 1,
further comprising a wire (122) connected to one side of the case (100),
wherein the fire prevention cover (200) has a connecting hole (221) through which the wire (122) passes.

9. A battery pack comprising a battery module (10) according to any one of claims 1 to 8.

10. The battery pack according to claim 9,
wherein a plurality of battery modules (10) are provided,
further comprising a fire prevention cover (200) positioned between the plurality of battery modules (10).

11. A vehicle comprising a battery module (10) according to any one of claims 1 to 8 or a battery pack according to any of claims 9 or 10.

## Patentansprüche

1. Batteriemodul, umfassend:
• ein Gehäuse (100), das so konfiguriert ist, dass es einen Innenraum bereitstellt;
• eine Batteriezelle, die innerhalb des Gehäuses (100) positioniert ist; und
• eine Brandschutzabdeckung (200), die auf einer Seite des Gehäuses (100) vorgesehen ist und eine erste Folie (201), die ein Glimmermaterial umfasst, und eine zweite Folie (202), die ein Metalldrahtmaterial umfasst, umfasst,
wobei die erste Folie (201) mit einer Seite des Gehäuses (100) gekoppelt ist, und
wobei die zweite Folie (202) mit der ersten Folie (201) gekoppelt ist,
und dass die Brandschutzabdeckung (200) ferner umfasst:
• eine dritte Folie (203), die mit der zweiten Folie (202) gekoppelt ist und ein Glimmermaterial umfasst, wobei sich die zweite Folie (202) zwischen der ersten Folie (201) und der dritten Folie (203) befindet,
**dadurch gekennzeichnet,**
**dass** die erste Folie (201) eine Vielzahl von ersten Durchgangslöchern (201a) aufweist, und
die dritte Folie (203) eine Vielzahl von zweiten Durchgangslöchern (203a) aufweist.

2. Batteriemodul nach Anspruch 1,
wobei die Vielzahl von ersten Durchgangslöchern (201a) und die Vielzahl von zweiten Durchgangslöchern (203a) in Bezug zueinander versetzt angeordnet sind.

3. Batteriemodul nach Anspruch 1,
wobei die Vielzahl von ersten Durchgangslöchern (201a) größer ist als die Vielzahl von zweiten Durchgangslöchern (203a).

4. Batteriemodul nach Anspruch 1,
ferner umfassend ein Befestigungselement, das so konfiguriert ist, dass es durch mindestens eine der ersten Folie (201) und der dritten Folie (203) und durch die zweite Folie (202) hindurchgeht.

5. Batteriemodul nach Anspruch 1,
wobei die erste Folie (201) an einer Seite des Gehäuses (100) angebracht ist.

6. Batteriemodul nach Anspruch 1,
wobei die zweite Folie (202) eine Maschenstruktur umfasst.

7. Batteriemodul nach Anspruch 1,
wobei ein Entlüftungsloch (101) auf einer Seite des Gehäuses (100) vorgesehen ist.

8. Batteriemodul nach Anspruch 1,
ferner umfassend einen Draht (122), der mit einer Seite des Gehäuses (100) verbunden ist,
wobei die Brandschutzabdeckung (200) ein Verbindungsloch (221) aufweist, durch das der Draht (122) hindurchgeht.

9. Batteriepack, umfassend ein Batteriemodul (10) nach einem der Ansprüche 1 bis 8.

10. Batteriepack nach Anspruch 9,
wobei eine Vielzahl von Batteriemodulen (10) vorgesehen sind,
ferner umfassend eine Brandschutzabdeckung (200), die zwischen der Vielzahl von Batteriemodulen (10) positioniert ist.

11. Fahrzeug, umfassend ein Batteriemodul (10) nach einem der Ansprüche 1 bis 8 oder ein Batteriepack nach einem der Ansprüche 9 oder 10.

## Revendications

1. Module de batterie comprenant :
• un boîtier (100) configuré pour fournir un espace interne ;
• une cellule de batterie positionnée à l'intérieur du boîtier (100) ; et
• un couvercle de prévention d'incendie (200) prévu sur un côté du boîtier (100) et comprenant une première feuille (201) qui comprend un matériau de mica et une deuxième feuille (202) qui comprend un matériau de fil métallique,
dans lequel la première feuille (201) est couplée à un côté du boîtier (100), et
dans lequel la deuxième feuille (202) est couplée à la première feuille (201),
et dans lequel le couvercle de prévention d'incendie (200) comprend en outre
• une troisième feuille (203) couplée à la deuxième feuille (202) et comprenant un matériau de mica, la deuxième feuille (202) étant située entre la première feuille (201) et la troisième feuille (203),
**caractérisé**
**en ce que** la première feuille (201) présente une pluralité de premiers trous traversants (201a), et
la troisième feuille (203) présente une pluralité de seconds trous traversants (203a).

2. Module de batterie selon la revendication 1,
dans lequel la pluralité de premiers trous traversants (201a) et la pluralité de seconds trous traversants (203a) sont disposées d'une manière décalée les unes par rapport aux autres.

3. Module de batterie selon la revendication 1,
dans lequel la pluralité de premiers trous traversants (201a) est plus grande que la pluralité de seconds trous traversants (203a).

4. Module de batterie selon la revendication 1,
comprenant en outre un organe de fixation configuré pour traverser au moins l'une de la première feuille (201) et de la troisième feuille (203) et à travers la deuxième feuille (202).

5. Module de batterie selon la revendication 1,
dans lequel la première feuille (201) est fixée à un côté du boîtier (100).

6. Module de batterie selon la revendication 1,
dans lequel la deuxième feuille (202) comprend une structure de maille.

7. Module de batterie selon la revendication 1,
dans lequel un trou d'évent (101) est prévu sur un côté du boîtier (100).

8. Module de batterie selon la revendication 1,
comprenant en outre un fil (122) connecté à un côté du boîtier (100),
dans lequel le couvercle de prévention d'incendie (200) présente un trou de connexion (221) à travers lequel passe le fil (122).

9. Bloc-batterie comprenant un module de batterie (10) selon l'une quelconque des revendications 1 à 8.

10. Bloc-batterie selon la revendication 9,
dans lequel une pluralité de modules de batterie (10) sont prévus,
comprenant en outre un couvercle de prévention d'incendie (200) positionné entre la pluralité de modules de batterie (10).

11. Véhicule comprenant un module de batterie (10) selon l'une quelconque des revendications 1 à 8 ou un bloc-batterie selon l'une quelconque des revendications 9 ou 10.
